# EUROPÄISCHE PATENTANMELDUNG

(11) **EP 1 130 852 A1**
(43) Veröffentlichungstag der Anmeldung: **05.09.2001**
(21) Anmeldenummer: 00104146.6
(22) Anmeldetag: 29.02.2000
(51) Int. Cl.: H04L 12/437, H04Q 11/04

(54) **Verfahren zum Ersatzschalten von Übertragungseinrichtungen in MPLS-Packete führende Ringarchitekturen**

(71) Anmelder: SIEMENS AKTIENGESELLSCHAFT, 80333 München (DE)
(72) Erfinder: Klink, Joachim, Dipl.-Ing., 81377 München (DE)

(57) **Zusammenfassung**

Die Ersatzschaltung von ATM-Zellen wird beim Stand der Technik unter der Verwendung von linearen Strukturen effizient gesteuert. Um diese Strukturen auch auf ringförmige Architekturen übertragen zu können, wird erfindungsgemäß aus linearen Strukturen eine ringförmige Struktur ausgebildet, indem in den Übertragungsabschnitt einer linearen Struktur weitere lineare Strukturen eingebunden werden, und die Vermittlungseinrichtungen der ursprünglichen linearen Struktur zusammengeführt werden. Weiterhin teilen sich erfindungsgemäß eine Mehrzahl von Ersatzstrecken eine gemeinsam reservierte Übertragungskapazität.

## Beschreibung

Die Erfindung betrifft ein Verfahren gemäß dem Oberbegriff des Patentanspruch 1.

Ein Verfahren zum Ersatzschalten von Übertragungseinrichtungen in Ringarchitekturen ist bereits aus der deutschen Patentanmeldung DE 197 039 92.8 bekannt.

Dieses bekannte Verfahren bezieht sich auf Übertragungseinrichtungen, über die Informationen nach einem asynchronen Transfermodus (ATM) geleitet werden. Hierbei ist sind Übertragungseinrichtungen zur bidirektionalen Übertragung von Informationen vorgesehen, bei der zwei als Endstellen fungierende Vermittlungseinrichtungen über eine Mehrzahl von Betriebsstrecken und eine Ersatzstrecke miteinander verbunden sind. Die beiden Endstellen enthalten jeweils Überwachungsvorrichtungen zur Feststellung von Übertragungsstörungen. Eine durch eine Überwachungsvorrichtung steuerbare Schaltvorrichtung verbindet eine Empfangsvorrichtung in einem ersten Schaltzustand mit der Betriebsstrecke und in einem zweiten Schaltzustand mit der Ersatzstrecke.

Nachteilig an diesem bekannten Verfahren ist, daß sie sich ausschließlich auf ATM-Übertragungseinrichtungen bezieht. Im Internet werden Informationen über eine Mehrzahl von Netzknoten, die als Router ausgebildet sein können, dem empfangenden Teilnehmer zugeführt. Zwischen den Routern können MPLS-Netze angeordnet sein. MPLS-Netze sind aber in dem bekannten Verfahren überhaupt nicht angeprochen.

Der Erfindung liegt die Aufgabe zugrunde, ein Verfahren der eingangs genannten Art derart weiterzubilden, daß Informationen, die nach einem Internetprotokoll übertragen werden, mit großer Sicherheit über eine Mehrzahl von Netzknoten übertragen werden können.

Die Erfindung wird ausgehend von den im Oberbegriff des Patentanspruchs 1 angegebenen Merkmale durch dessen kennzeichnende Merkmale gelöst.

Vorteilhaft an der Erfindung ist insbesondere, daß eine Mehrzahl von Ersatzstrecken sich eine gemeinsam reservierte Übertragungskapazität teilen.

Vorteilhafte Weiterbildungen der Erfindung sind in den Unteransprüchen anggegeben.

Die Erfindung wird im folgenden anhand eines Ausführungsbeispiels näher erläutert.

Es zeigen:
- Figur 1: ein in das Internet eingebundenes MPLS-Netz,
- Figur 2: Eine Konfiguration zur bidirektionalen Übertragung von ATM-Zellen in einer linearen 1:1-Struktur,
- Figur 3: eine ringförmige Konfiguration, auf der das erfindungsgemäße Verfahrens zum Ablauf gelangt,
- Figur 4: das erfindungsgemäße Verfahren im Falle eines einfachen Fehlers,
- Figur 5: das erfindungsgemäße Verfahren im Falle eines Doppelfehlers,

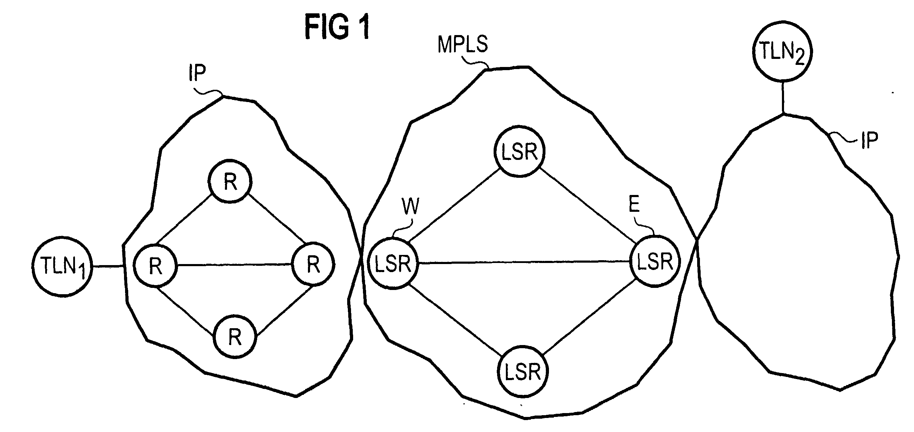

In Fig. 1 ist beispielhaft aufgezeigt, wie Informationen ausgehend von einem Teilnehmer TLN1 einem Teilnehmer TLN2 zugeführt werden. Der sendende Teilnehmer TLN1 ist dabei an das Internet-Netz IP angeschlossen, durch das die Informationen nach einem Internetprotokoll wie z.B. das IP-Protokoll geleitet werden. Dieses Protokoll ist kein verbindungsorientiertes Protokoll. Das Internet-Netz IP weist eine Mehrzahl von Routern R auf, die untereinander vermascht sein können. Der empfangende Teilnehmer TLN2 ist an ein weiteres Internet-Netz IP angeschlossen. Zwischen den beiden Internet-Netzen IP ist ein MPLS-Netz (Multiprotocol Packet Label Switching) eingefügt, durch das Informationen in Form von MPLS-Paketen verbindungsorientiert durchgeschaltet werden. Dieses Netz weist eine Mehrzahl von miteinander vermaschten Routern auf. In einem MPLS-Netz können dies sogenannte Label Switched Router (LSR) sein. Einer der Router ist als sendende Einrichtung W und ein weiterer als empfangende Einrichtung E bezeichnet.

MPLS-Pakete weisen jeweils einen Kopfteil (Paketkopf) sowie einen Informationsteil auf. Der Kopfteil dient der Aufnahme von Verbindungsinformation während der Informationsteil der Aufnahme von Nutzinformation dienlich ist. Als Nutzinformation werden IP-Pakete verwendet. Die im Kopfteil enthaltene Verbindungsinformation ist als MPLS-Verbindungsnummer ausgebildet. Diese hat aber lediglich im MPLS-Netz Gültigkeit. Wenn somit ein IP-Paket vom Internet-Netz IP in das MPLS-Netz eindringt, wird diesem der im MPLS-Netz gültige Kopfteil angehängt. Darin sind alle Verbindungsinformationen enthalten, die den Weg des MPLS-Paketes im MPLS-Netz vorgeben. Verläßt das MPLS-Paket das MPLS-Netz, wird der Kopfteil wieder entfernt und das IP-Paket im sich daran anschließenden Internet-Netz IP nach Maßgabe des IP-Protokolls weitergeroutet.

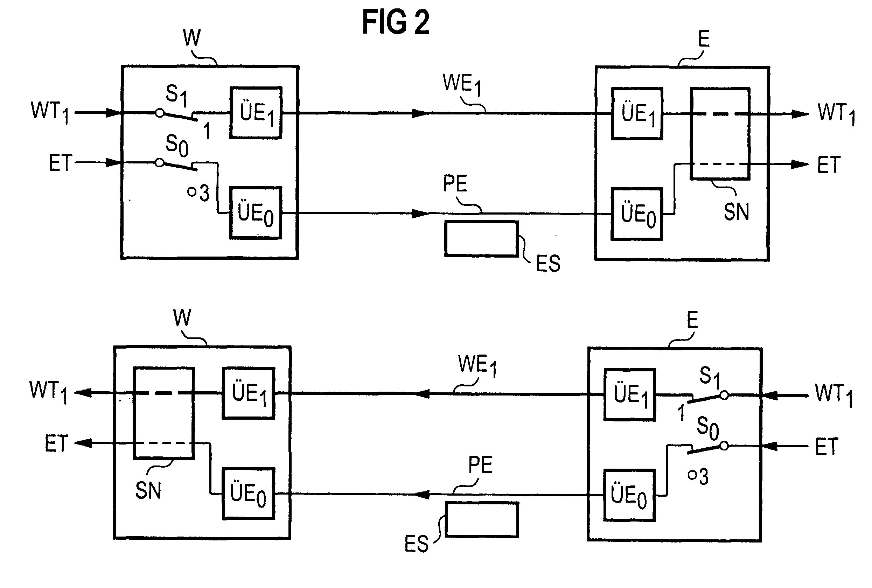

In Fig. 2 sind beispielshaft zwei Knoten eines MPLS-Netzes in einer linearen Konfiguration aufgezeigt, welche jeweils als Vermittlungseinrichtung W, E ausgebildet sind. Hierbei handelt es sich um eine 1:1 Struktur. In vorliegendem Ausführungsbeispiel wird davon ausgegangen, daß es sich bei den Vermittlungseinrichtungen um MPLS-Cross Connect Vermittlungseinrichtungen oder Label Switched Router handelt. Die Verwendung derart ausgebildeter Vermittlungseinrichtungen bedeutet jedoch keine Einschränkung der Erfindung, andere Vermittlungseinrichtungen wie z.B. ATM-Vermittlungseinrichtungen sind ebenso verwendbar. In Fig. 2 sollen nun MPLS-Pakete (Multiprotocol Label Switched Packets) von dem Label Switched Router W zu dem Label Switched Router E hin übertragen werden.

In Fig. 2 ist ein bidirektionaler Übertragungsfall dargestellt. Die Übertragung von MPLS-Paketen im MPLS-Netz ist jedoch unidirektional definiert. Demzufolge sind im bidirektionalen Übertragungsfall für die Hin - und Rückübertragung von einer Verbindung WT zugehörigen MPLS-Pakete zwischen dem Label Switched Router W und dem Label Switched Router E insgesamt 2 "Verbindungen" (eine für die Hinrichtung und eine für die Rückrichtung) aufzubauen. Eine "Verbindung" im MPLS-Netz wird als Label Switched Path (LSP) bezeichnet.

Die Label Switched Router W, E sind über Betriebsstrecken (WORKING ENTITY), die gemäß vorliegendem Ausführungsbeispiel als eine einzige Betriebsstrecke WE₁ ausgebildet sein sollen, sowie eine Ersatzstrecke PE (PROTECTION ENTITY) miteinander verbunden. Weiterhin sind Schalteinrichtungen S₀ ,S₁ (BRIDGE) aufgezeigt, über die die ankommenden MPLS-Pakete wahlweise über die Betriebsstrecke WE₁ oder die Ersatzstrecke PE zum Label Switched Router E hin übertragen werden.

Weiterhin sind Fig. 2 Selektionseinrichtungen SN entnehmbar, deren Aufgabe darin besteht, die über die Betriebsstrecke WE₁ übertragenen MPLS-Pakete dem Ausgang des Label Switched Routers E zuzuführen. Die Selektionseinrichtungen SN sind als Koppelfeld ausgebildet. Das Koppelfeld SN ist sowohl im Label Switched Router W als auch im Label Switched Router E enthalten.

Weiterhin sind in beiden Label Switched Router W, E Überwachungsvorrichtungen ÜE₀, ÜE₁ (PROTECTION DOMAIN SINK, PROTECTION DOMAIN SOURCE) aufgezeigt, die den Zustand bzw. die Qualität der über die Betriebstrecke WE₁ übertragenen MPLS-Pakete überwachen. Beispielsweise werden die MPLS-Pakete der Verbindung mit der Nummer 1 WT₁ bevor sie über die Betriebsstrecke WE₁ zum Label Switched Router E hin übertragen werden, in der Überwachungseinrichtung ÜE₁ des Label Switched Routers W mit Steuerinformation versehen, die die Überwachungseinrichtung ÜE₁ des empfangenden Label Switched Routers E entnimmt und überprüft. Anhand dieser Steuerinformation kann dann ermittelt werden, ob die Übertragung der MPLS-Pakete korrekt erfolgt ist oder nicht. Insbesondere kann hier ein Totalausfall (SIGNAL FAIL FOR WORKING ENTITY) der Betriebsstrecke WE₁ ermittelt werden. Ebenso sind aber auch unter Verwendung bekannter Verfahren Verschlechterungen in der Übertragungsqualität (SIGNAL DEGRADE) ermittelbar.

Die Überwachungsvorrichtung ÜE₁ schließen die Betriebsstrecke WE₁ auf beiden Seiten ab. Weitere Überwachungsvorrichtungen ÜE₀ sind auf beiden Enden der Ersatzstrecke PE angeordnet. Diese soll im Fehlerfall als Übertragungsstrecke für die außer Betrieb genommene Betriebsstrecke WE₁ dienen. Weiterhin werden hierüber Ersatzschalteprotokolle ES übertragen, womit die Intaktheit der Ersatzstrecke oberste Priorität hat.

In jedem der Label Switched Router W, E sind ferner in Fig. 2 nicht aufgezeigte zentrale Steuereinrichtungen angeordnet. Diese beinhalten jeweils lokale und globale Prioritätstabellen. Bei ersteren wird Zustand und Priorität des lokalen Label Switched Routers abgespeichert, während bei letzteren Zustand und Priorität sowohl des lokalen als auch des verbleibenden Label Switched Routers abgespeichert ist. Durch die Einführung der Prioritäten wird erreicht, daß beim gleichzeitigen Auftreten mehrerer Ersatzschalteanforderungen festgelegt ist, welche Strecke ersatzzuschalten ist. Ebenso sind in den Prioritätstabellen die Ersatzschalteanforderungen priorisiert. So besteht beispielsweise eine hochpriore Anforderung von einem Anwender. Da dieser Ersatzschalteanforderung eine hohe Priorität zugewiesen ist, wird sie somit bevorzugt gesteuert. Eine von der Betriebsstrecke WE₁ gesteuerte Ersatzschalteanforderung wird dann in diesem Fall zurückgewiesen.

Die zentralen Steuereinrichtungen der Label Switched Router W, E tauschen Informationen in einem Ersatzschalteprotokoll ES aus. Dieses Protokoll wird über die Ersatzstrecke PE übertragen und von der zugeordneten Überwachungseinrichtung ÜE₀ dem jeweils empfangenden Label Switched Router E entnommen, und der betreffenden zentralen Steuereinrichtung zugeführt. Weiterhin wird in der zentralen Steuervorrichtung dafür Sorge getragen, daß im Fehlerfall die Schaltvorrichtungen S₀,S₁ in entsprechender Weise gesteuert werden.

Im Protokoll ES sind Informationen bezüglich der momentanen Zustände der Schaltvorrichtungen abgelegt. Weiterhin sind noch weitere Informationen bezüglich der generierten Ersatzschalteanforderung gespeichert. Das Protokoll wird jeweils bei Generierung der Ersatzschalteanforderung zwischen den beiden Label Switched Router ausgetauscht. In einer speziellen Ausgestaltung der Erfindung wird vorgesehen, das Protokoll ES zusätzlich zyklisch zwischen beiden Label Switched Router zu übertragen.

Gemäß Fig. 2 werden die MPLS-Pakete im intakten Betriebsfall dem Label Switched Router E zugeführt. Die MPLS-Pakete sollen dabei der Verbindung WT₁ angehören. Die einzelnen Verbindungen werden anhand der im Paketkopf eingetragenen logischen MPLS-Verbindungsnummer unterschieden.

Die Schaltvorrichtungen S₀, S₁ des Label Switched Router W sind in diesem (noch intakten) Betriebsfall derart geschaltet, daß die MPLS-Pakete der Überwachungseinrichtung ÜE₁ unmittelbar zugeführt werden. Hier werden die MPLS-Pakete mit den bereits angesprochenen Steuerinformationen beaufschlagt und über die Betriebsstrecke WE₁ der Überwachungseinrichtungen ÜE₁ dem empfangenden Label Switched Router E zugeführt. Dort wird die mitgeführte Steuerinformation überprüft und gegebenenfalls ein Fehlerfall ermittelt. Ist die Übertragung korrekt erfolgt, werden die MPLS-Pakete dem Koppelfeld SN zugeführt. Hier wird die MPLS-Verbindungsinformation ausgewertet und nach Maßgabe dieser Auswertung das MPLS-Paket über dem in Frage kommenden Ausgang des Koppelfeldes SN in das MPLS-Netz weitergeleitet.

Die Ersatzstrecke PE kann während dieser Zeit ungenutzt bleiben. Gegebenenfalls können aber auch während dieser Zeit Sonderdaten (EXTRA TRAFFIC) der Vermittlungseinrichtung E zugeführt werden. Die Schaltvorrichtung S₀ der Vermittlungseinrichtung W nimmt also die Stellungen 1 oder 3 ein. Die Übertragung der Sonderdaten erfolgt ebenfalls in MPLS-Paketen. Die Überwachungseinrichtung ÜE₀ im Label Switched Router W beaufschlagt die MPLS-Pakete in gleicher Weise mit Steuerinformationen wie dies im Falle der über die Betriebsstrecke WE₁ bereits geschildert wurde. Ebenso erfolgt die Überwachung der Strecke. Als Sonderdaten können dabei Steuerdaten allgemeiner Art verwendet werden, die auch als spezielle Verkehrsdaten ausgebildet sein können.

Als Sonderdaten kann über die Ersatzstrecke auch niederpriorer Verkehr übertragen werden, der nur dann im Netz übertragen wird, wenn ausreichend Ressourcen vorhanden sind. Der niederpriore Verkehr wird dann in diesem Fall durch Ersatzschalten des hochprioren Verkehrs automatisch verdrängt. In diesem Fall erfolgt die Verdrängung der Sonderdaten im Ersatzschaltefall nicht durch Umschalten der Schaltvorrichtung Sₒ in Figur 2, sondern durch Priorisierung des hochprioren Verkehrs gegenüber den niederprioren Sonderdaten in jeder Übertragungseinrichtung.

Im folgenden wird nun davon ausgegangen, daß die Betriebsstrecke WE₁ ausgefallen ist. Dies wird von der dieser zugeordneten Überwachungseinrichtung ÜE₁ des empfangenden Label Switched Routers E ermittelt. Die Ersatzschalteanforderung wird nun zur betreffenden zentralen Steuereinrichtung übermittelt, und dort in der lokalen Prioritätstabelle sowie der globalen Prioritätstabelle abgelegt.

Nach Maßgabe der in der globalen Prioritätstabelle abgespeicherten Prioritäten wird nun ermittelt, ob noch höher priore Anforderungen anstehen.Dies könnte beispielsweise die bereits angesprochene Umschalteanforderung des Anwenders (FORCED SWITCH FOR WORKING ENTITY) sein. Sind keine höher priorisierten Anforderungen vorhanden, wird die Schaltvorrichtung S₁ des Label Switched Routers E in den verbleibenden Betriebszustand gesteuert, wie in Fig. 2 aufgezeigt. Im folgenden wird nun das Ersatzschalteprotokoll Es über die Ersatzstrecke PE dem Label Switched Router W zugeführt. In diesem Ersatzschalteprotokoll sind die bereits angesprochenen Informationen enthalten. Wesentlich ist, daß die lokale Prioritätslogik die Ausgestaltung der Information bezüglich der generierten Ersatzschalteanforderung definiert, und die globale Prioritätslogik die Stellung der Schaltvorrichtung S₀.

Von der Überwachungseinrichtung ÜE₀ des Label Switched Routers E wird nun das Ersatzschalteprotokoll ES übernommen und der zentralen Steuereinrichtung des Label Switched Router E zugeführt. Liegen auch hier in der globalen Prioritätstabelle keine weiteren höherpriorisierten Anforderungen an, so wird auch hier die Schaltvorrichtung S₁ in entsprechender Weise angesteuert und eingestellt. Weiterhin wird die Schaltvorrichtung S₀ des Label Switched Routers W ebenfalls umgelegt. Der neue Status der beiden Schaltvorrichtungen S₀, S₁ wird dem Label Switched Router E über das Ersatzschalteprotokoll ES quittiert, und in der dortigen globalen Prioritätstabelle aktualisiert. Die MPLS-Pakete der Verbindung WT₁ werden dann über die Ersatzstrecke PE dem Label Switched Router E zugeführt.

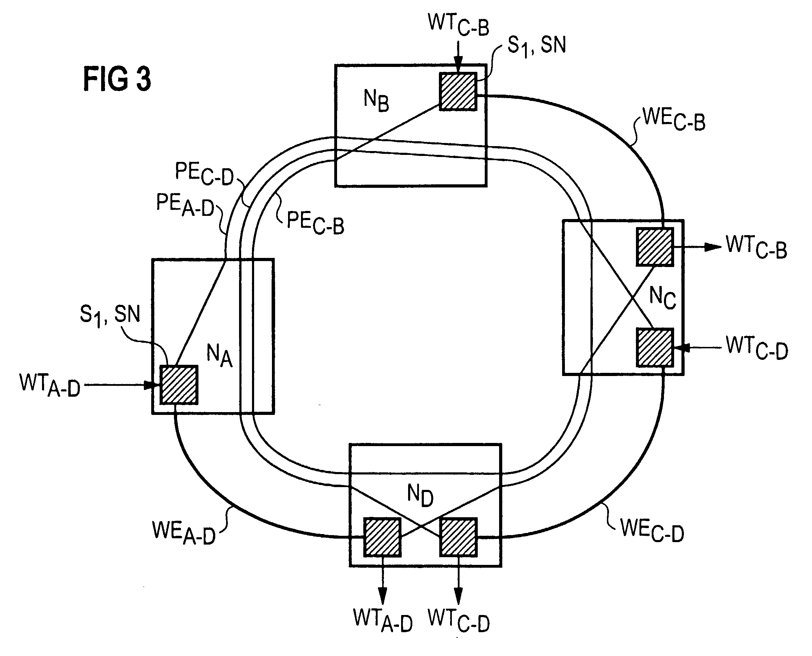

In Fig. 3 zeigt die erfindungsgemäße Ringkonfiguration. Die Vermittlungseinrichtungen sind dabei so geschaltet, daß sich ein geschlossener Ring ergibt. Gemäß vorliegendem Ausführungsbeispiel soll dabei dieser Ring aus linearen Verbindungsabschnitten aufgebaut sein, wie sie in Fig. 2 aufgezeigt sind (1:1-Struktur).

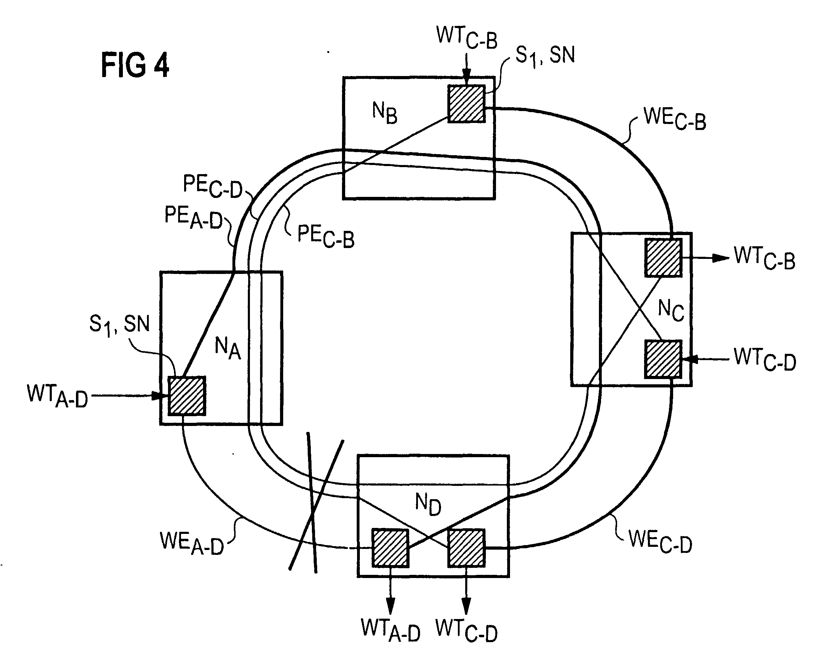

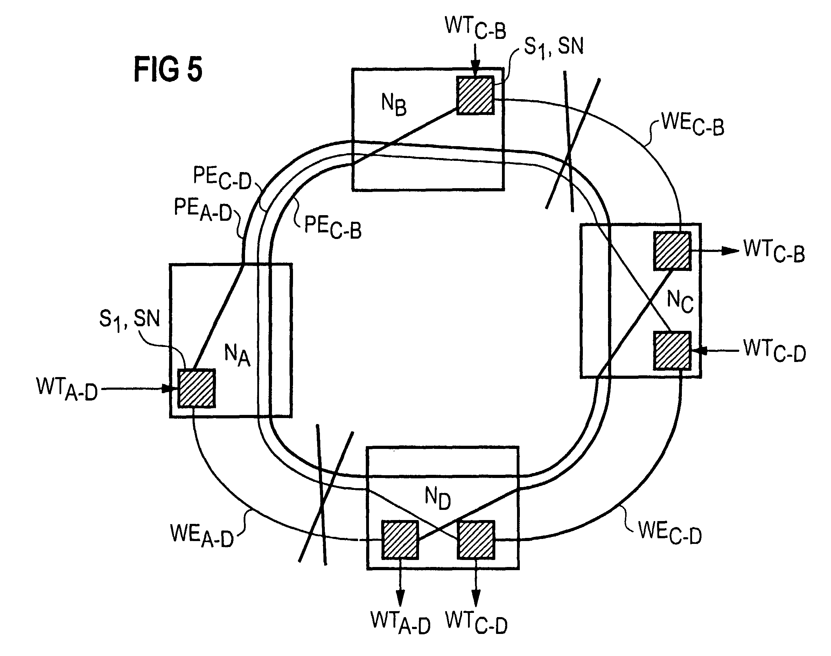

Demgemäß sind Fig. 3 eine Mehrzahl von Label Switched Routern entnehmbar. Dies sind die Label Switched Router N_{A}, N_{B}, N_{C} sowie N_{D}. Jeweils zwei dieser Label Switched Router schließen dabei Übertragungsabschnitte ab. Am Beispiel der Label Switched Router N_{A}, N_{D} sind dies die Betriebsstrecke WE_{A-D} sowie die Ersatzstrecke PE_{A-D}. In gleicher Weise schließen die beiden Label Switched Router N_{B}, N_{C} die Verbindungsabschnitte WE_{C-B}, PE_{C-B} ab. Bei letzterer handelt es sich bekanntermaßen um jeweils zugeordneten Ersatzstrecke. Gemäß Fig. 3 (sowie auch Fig. 4, Fig. 5) sind die Betriebsstrecken durch einen dickeren Strich hervorgehoben, während die Ersatzstrecken lediglich durch einen dünnen Strich gekennzeichnet sind.

Weiterhin sind allen Label Switched Routern Schalteinrichtungen S₁, SN entnehmbar, die mit den gemäß Fig. 2 aufgezeigten Schalteinrichtungen identisch sind. Zum einfacheren Verständnis wird hier auf eine detailliertere Offenbarung verzichtet. In allen Label Switched Routern sind - hier ebenfalls nicht näher aufgezeigte - zentrale Steuereinrichtungen mit lokalen und globalen Prioritätstabellen angeordnet. Die Funktionsweise wurde bereits im Falle der Verwendung einer linearen Anordnung gemäß Fig. 2 näher erläutert.

Es soll nun davon ausgegangen werden,daß eine Verbindung WT_{A-D} über den Ring zwischen zwei Teilnehmerendeinrichtungen geführt werden soll. Dabei werden die dieser Verbindung zugehörigen MPLS-Pakete dem Label Switched Router N_{A} zugeführt und über die jeweils aktive Betriebsstrecke WE_{A-D} zum Label Switched Router N_{D} geleitet, wo die der Verbindung WT_{A-D} zugehörigen MPLS-Pakete den Ring wieder verlassen.

In Fig. 3 ist durch die Vorgabe eines Pfeiles die Richtung angezeigt, mit der diese MPLS-Pakete in den Ring eindringen und wieder verlassen. Da es sich jedoch bei dieser Verbindung um eine bidirektionale Verbindung handelt, werden die zur betreffenden Rückrichtung gehörenden MPLS-Pakete über dieselben Verbindungsabschnitte geleitet. Dies bedeutet, daß die zu der Rückrichtung angehörenden MPLS-Pakete über den Label Switched Router N_{D} in den Ring eindringen, über die Verbindung WE_{A-D} zum Label Switched Router N_{A} geführt werden und dort den Ring wieder verlassen. Zur besseren Übersichtlichkeit wird jedoch im folgenden lediglich eine Richtung aufgezeigt. Als weitere Ausgestaltung der Erfindung wird vorgesehen, diese Konfiguration als unidirektionalen Übertragungsfall auszubilden. Dies ist ohne weiteres möglich, da die Übertragung von MPLS-Paketen im Gegensatz zur Übertragung von ATM-Zellen unidirektional definiert ist. Allerdings wird auch für diesen unidirektionalen Übertragungsfall eine Rückrichtung und ein Ersatzchalteprotokoll benötigt, weil bei der hier zutreffenden 1:1 Architektur der Ersatzschaltevorgang immer zwischen Sende- und Empfangsseite koordiniert werden muß.

Gleiches gilt für die gemäß Fig. 3 aufgezeigten weiteren Verbindungen WT_{C-B} sowie WT_{C-D}. Die den hier aufgezeigten 3 Verbindungen WT_{A-D}, WT_{C-B} sowie WT_{C-D} zugehörigen MPLS-Pakete werden über die jeweils aktiven Betriebsstrecken WE_{A-D}, WE_{C-B} sowie WE_{C-D} übertragen. Die hierzu gehörigen Ersatzstrecken PE_{A-D}, PE_{C-B} sowie PE_{C-D} bleiben zunächst unberührt.

Fig. 4 zeigt nun, wie eine Störung auf dem Ring zu behandeln ist. Dies soll am Beispiel der Verbindung WT_{A-D} erfolgen. Es wird somit davon ausgegangen, daß der Übertragungsabschnitt zwischen den Label Switched Routern N_{A} sowie N_{D} durch eine Störung beeinflußt wird. Es wird weiter davon ausgegangen, daß dies zunächst die einzige Störung im Ring sein soll. Durch Austausch des Ersatzschalteprotokolles ES über die Ersatzstrecke PE_{A-D} wird dem Label Switched Router N_{A} die Störung mitgeteilt. Nach Maßgabe der Auswertung der lokalen sowie globalen Prioritäten wird nun die Schalteinrichtung S₁ des Label Switched Routers N_{A} in den verbleibenden Betriebszustand gesteuert. Die der Verbindung WE_{A-D} zugehörigen MPLS-Pakete werden nun im folgenden über diese Ersatzstrecke PE_{A-D} und über die Label Switched Router N_{B} und N_{C} dem Label Switched Router N_{D} zugeführt, wo sie den Ring verlassen.

Erfindungsgemäß wird nun für zwischen zwei Label Switched Routern gelegene Verbindungsabschnitte eine gemeinsame Übertragungskapazität für den gemeinsam genutzten Ersatzweg reserviert. Dies ist möglich, da davon ausgegangen wird, daß lediglich ein Verbindungsabschnitt des Ringes störungsbehaftet ist. Beispielsweise könnte den Verbindungen WT_{A-D}, WT_{C-B} sowie WT_{C-D} jeweils 140 Mbit/sec zugewiesen werden. Für den zwischen Label Switched Routern N_{A}, N_{B} gelegenen Verbindungsabschnitt würden somit für alle 3 Ersatzstrecken 140 MBit/sec zugewiesen werden. Dies bedeutet, daß im Ersatzschaltefall lediglich einer Betriebsstrecke auf der zugeordneten Ersatzstrecke 140 Mbit/s zur Verfügung stehen. Für die zwischen den Label Switched Routern N_{B}, N_{C} gelegenen Verbindungsabschnitte gelten ähnliche Überlegungen. Hier wären in gleicher Weise 140 MBit/s zu reservieren, wobei im Ersatzschaltefall lediglich einer Betriebsstrecke auf der zugeordneten Ersatzstrecke ebefalls eine Übertragungskapazität von 140 Mbit/s in vollem Umfang zur Verfügung stehen.

Eine derartige Vorgehensweise hat insbesondere den Vorteil, daß pro Verbindung weniger Gebühren an Übertragungskapazität angemeldet werden müssen ("Shared Protection").Im Falle einer "Dedicated Protection" wäre dies anders. Am günstigsten ist der Einspareffekt in dem Falle, wo eine Verbindung zwischen zwei benachbarten Label Switched Routern erstellt wird. Dies ist beispielsweise für die Verbindung WT_{A-D} zwischen den Label Switched Routern N_{A}, N_{D} der Fall. Der Einspareffekt ist hier deshalb am größten, weil die zugehörigen Ersatzstrecken über die beiden weiteren Label Switched Router N_{B}, N_{C} zum Label Switched Router N_{D} geführt werden müssen. Gleiches gilt für die weiteren aufgezeigten Verbindungen WT_{C-D} sowie WT_{C-D}.

Falls der Label Switched Router N_{A} als Vermittlungsebene einer höheren Hierarchieebene (wie z. B. ein Core Netz) ausgebildet ist, wäre der Einspareffekt gegenüber einer "Dedicated Protection" Konfiguration am geringsten. In diesem Fall müßte jeder Verkehr der übrigen Label Switched Router über diese höher gelegene Label Switched Router N_{A} geführt werden. Ein mittlerer Einspareffekt ergäbe sich in dem Falle, daß jede der Label Switched Router im Sinne einer kompletten Vermaschung mit jedem Label Switched Router kommunizieren würde.

Sonderdaten allgemeiner Art, wie sie im Zusammenhang gemäß Fig. 2 erläutert, können nicht über den Ring übertragen werden. Dies sind insbesondere die dort angesprochenen Steuerdaten. Erfindungsgemäß können jedoch die als Sonderdaten ausgebildeten speziellen Verkehrsdaten aufgrund der ihnen zugewiesenen eigenen Priorität übertragen werden.

Abschließend sei gemäß Fig. 5 beispielhaft ein weiterer Störungsfall aufgezeigt. Hier soll neben einer einfach ausgebildeten Störung, wie sie in Fig. 4 aufgezeigt ist, noch zusätzlich ein Störungsfall auf der Verbindungsstrecke WE_{C-B} erfolgen. In diesem Fall werden weitere Ersatzschalteprotokolle ausgetauscht. Hier ist dann jedoch sowohl die Betriebsstrecke als auch die Ersatzstrecke störungsbehaftet. Aufgrund der gemeinsamen Reservierung von Übertragungskapazität für Ersatzstrecken würden bei Ersatzschaltung beider betroffener Betriebsstrecken auf die jeweilige Ersatzstrecke somit auch Verbindungen betroffen, die von der Störung nicht beeinflußt werden. Dies sind in vorliegendem Fall die Verbindungen WT_{C-D}. Da ein Umschalten in diesem Fall keinen Vorteil bringen würde, da auch die Ersatzstrecke fehlerbehaftet ist, wird somit im Falle des Auftretens von Doppelfehlern auf ein Umschalten verzichtet.

## Patentansprüche

1. Verfahren zum Ersatzschalten von Übertragungseinrichtungen, mit
wenigstens zwei Vermittlungseinrichtungen (N_{A}, N_{D}), die jeweils einen aus Betriebsstrecken (WE_{A-D}, WE_{D-A}) und/oder Ersatzstrecken (PE_{A-D}, PE_{D-A}) gebildeten Übertragungsabschnitt abschließen, und zwischen denen Informationen über diesen Übertragungsabschnitt ausgetauscht werden, wobei im Falle einer Störung auf dem betreffenden Übertragungsabschnitt die hierüber bislang übertragen Informationen nach Maßgabe von Prioritätskriterien und logischen Verbindungsinformationen gegebenenfalls auf die Ersatzstrecke umgeleitet werden,
**dadurch gekennzeichnet,**
daß die Informationen in MPLS-Pakete eingefügt sind,
daß zwei gegenläufige unidirektionale MPLS-Verbindungen logisch miteinander assoziiert sind, wobei die beiden gegenläufigen MPLS-Verbindungen jeweils die gleichen Vermittlungseinrichtungen verbinden,
daß mehrere lineare Übertragungsabschnitte derart zusammengefügt sind, daß ein Ringleitungssystem gebildet ist, wobei Betriebsstrecke und Ersatzstrecke über unterschiedliche physikalische Wege geführt sind, und
daß eine Mehrzahl von Ersatzstrecken (PE_{A-D}, PE_{C-B}, PE_{C-D}) sich eine gemeinsam reservierte Übertragungskapazität teilen.

2. Verfahren nach Anspruch 1,
**dadurch gekennzeichnet,**
daß ein unidirektionales Ringleitungssystem durch Verwenden von unidirektionalen Vermittlungseinrichtungen gebildet ist, wobei allerdings die logische Assoziation der beiden gegenläufigen, undirektionaler MPLS-Verbindungen weiterhin beibehalten wird.

3. Verfahreh nach Anspruch 1 oder 2,
**dadurch gekennzeichnet,**
daß im Ersatzschaltefall eine Ersatzschalteanforderung generiert wird, der weitere Prioritäten zugewiesen sind.

4. Verfahren nach Anspruch 1, bis 3,
**dadurch gekennzeichnet,**
daß die logische Verbindungsinformation die MPLS-Verbindungsnummer (Label Value) ist.

5. Verfahren nach Anspruch 1 bis 4,
**dadurch gekennzeichnet,**
daß lokale und globale Prioritätstabellen vorgesehen werden, in der die Rangfolge der Prioritäten festgelegt ist.

6. Verfahren nach einem der vorstehenden Ansprüche,
**dadurch gekennzeichnet,**
daß bei Eintreffen einer Ersatzschalteanforderung in der empfangenden Vermittlungseinrichtung ein Ersatzschalteprotokoll generiert wird, das lediglich einmal über die Ersatzstrecke (PE) der sendenden Vermittlungseinrichtung zugeführt wird.

7. Verfahren nach einem der vorstehenden Ansprüche,
**dadurch gekennzeichnet,**
daß Totalaufall und Verschlechterung einer Betriebsstrecke in der Überwachungseinrichtung der empfangenden Vermittlungseinrichtung ermittelt werden.

8. Verfahren nach einem der vorstehenden Ansprüche,
**dadurch gekennzeichnet,**
daß die Vermittlungseinrichtungen als MPLS-Crossconnect-Schalteinrichtungen ausgebildet sind.

9. Verfahren nach einem der vorstehenden Ansprüche,
**dadurch gekennzeichnet,**
daß die Ersatzschaltung gegebenenfalls durch Ansteuern einer in der sendenden Vermittlungseinrichtung enthaltenden Schaltvorrichtung (S₁) sowie unter Verwendung einer in der empfangenden Vermittlungseinrichtung angeordneten Selektionseinrichtung (SN) erfolgt.

10. Verfahren nach einem der vorstehenden Ansprüche,
**dadurch gekennzeichnet,**
daß über die Ersatzstrecke (PE) in betriebsstörungsfreien Zeiten gegebenenfalls Sonderdaten übertragen werden.

11. Verfahren nach einem der vorstehenden Ansprüche,
**dadurch gekennzeichnet,**
daß die Sonderdaten als niederpriorer Verkehr ausgebildet sind, der im Falle eines Ersatzschaltens des hochprioren Verkehrs automatisch von diesem verdrängt werden.

12. Verfahren nach einem der vorstehenden Ansprüche,
**dadurch gekennzeichnet,**
daß die Selektionseinrichtung (SN) als Koppelfeld und/ oder als einfaches Schaltelement ausgebildet ist.

13. Verfahren nach einem der vorstehenden Ansprüche,
**dadurch gekennzeichnet,**
daß das Ersatzschalteprotokoll zyklisch zwischen der sendenden Vermittlungseinrichtung sowie der empfangenden Vermittlungseinrichtung ausgetauscht wird.

14. Verfahren nach einem der vorstehenden Ansprüche,
**dadurch gekennzeichnet,**
daß eine Gruppenersatzschaltung vorgesehen ist, indem alle über denselben physikalischen Pfad geführten MPLS-Verbindungen logisch zu einer Gruppe zusammengefaßt werden, und für die derart geformte Gruppe wenigstens zwei Ersatzschalteverbindungen erstellt werden, wobei jeweils eine dieser Ersatzschalteverbindungen über eine Betriebsstrecke (WE) und eine weitere dieser Ersatzschalteverbindungen über die Ersatzstrecke (PE) eingerichtet wird.

15. Verfahren nach einem der vorstehenden Ansprüche,
**dadurch gekennzeichnet,**
daß im Falle des Vorsehens einer Gruppenersatzschaltung von den Überwachungseinrichtungen (ÜE₀...ÜEₙ) lediglich die wenigstens zwei Ersatzschalteverbindungen überwacht werden.

16. Verfahren nach einem der vorstehenden Ansprüche,
**dadurch gekennzeichnet,**
daß das Einrichten der über die wenigstens eine Betriebs-strecke (WE₁) geführten Verbindungen sowie der über die Ersatzstrecke (PE) geführten Verbindungen durch ein MPLS Signalisierungsprotokoll erfolgt, das auch Bandbreite in den Übertragungseinrichtungen reserviert und den Weg der Betriebsstrecke (WE₁) und der Ersatzstrecke (PE) festlegt.
